# EUROPÄISCHE PATENTSCHRIFT

(11) **EP 0 819 878 B1**
(45) Veröffentlichungstag und Bekanntmachung des Hinweises auf die Patenterteilung: **10.05.2000**
(21) Anmeldenummer: 95924548.1
(22) Anmeldetag: 26.06.1995
(51) Int. Cl.: F16K 39/04, F16K 3/10

(54) **SCHEIBEN-REGELVENTIL MIT ENTLASTUNGSEINRICHTUNG**
REGULATION DISC VALVE WITH DISCHARGING DEVICE
SOUPAPE DE REGULATION A DISQUE AVEC DISPOSITIF DE DECHARGEMENT

(30) Priorität: 05.04.1995 RU 95104949
(43) Veröffentlichungstag der Anmeldung: 21.01.1998
(73) Patentinhaber: Matusyak, Vladimir Leonidovich, Rovenskaya obl., 265921 (UA)
(72) Erfinder: Matusyak, Vladimir Leonidovich, Rovenskaya obl., 265921 (UA)
(74) Vertreter: Neumann, Günter
(86) Internationale Anmeldenummer: RU9500104
(87) Internationale Veröffentlichungsnummer: WO9631719

(56) Entgegenhaltungen:
- GB-A- 2 119 065
- GB-A- 2 261 051
- SU-A- 393 525
- SU-A- 731 163
- SU-A- 987 257
- SU-A- 996 784

## Beschreibung

Die Erfindung betrifft ein Scheiben-Regelventil mit einer Entlastungseinrichtung und kann in Regel- und Drosselventilen des Scheibentyps zur Gewährleistung der geforderten Parameter der technologischen Prozesse eingesetzt werden. Es findet z.B. in der Wärmeenergietechnik in Kraftwerken zur Regelung des Speisewasserdurchsatzes eines Dampferzeugers Verwendung.

Bekannt ist ein Scheiben-Regelventil mit einer äußeren Entlastungseinrichtung (SU Nr. 731163) und einer Druckdifferenz von 20 MPa. Konstruktionsbedingt ist dieses Ventil sehr kompliziert herzustellen und zu warten, was seine Betriebssicherheit mindert. Außerdem erlaubt es nur eine begrenzte Durchsatzleistung.

Aus der SU-A-987257 ist ein Scheiben-Regelventil mit interner Entlastungseinrichtung zu entnehmen. Dieses weist einen unbeweglichen Sitz mit peripheren Durchströmfenstern und einem Zentralkanal im Körperinnern auf.

Dieser Sitz hat ständigen Kontakt zu dem mit Ausschnitten und mit einer Spindel versehenen Schieber. Das Ventil hat einen mit Druck- und Ablaßraum kommunizierenden Zylinder mit Kolben, was eine Entlastungskammer zwischen ihnen bildet.

Die SU-A-996784 offenbart ein oberbegriffsmäßiges Scheiben-Regelventil mit Entlastungsvorrichtung, in dessen Körper ein unbeweglicher Sitz mit peripheren Profildurchströmfenstern und einem zentralen Kanal montiert ist, der einen ständigen Kontakt zu dem mit Ausschnitten hergestellten und mit der Spindel verbundenen Schieber hat sowie ein mit dem Druck- und Ablaßraum verbundenen Zylinder, in dem ein Kolben montiert ist. Der Kolben bildet mit dem Zylinder eine Entlastungskammer, wobei der Schieber unlösbar mit dem Kolben verbunden ist. Dieser weist eine durchgehende zentrale Längsbohrung auf, die die Entlastungskammer mit dem zentralen Kanalsitz verbindet. In diesem Ventil ist der Zylinder als ein unabhängiges Teil hergestellt, das im Druckraum des Ventils montiert ist und sich mit Hilfe eines Axiallagers auf einen Aufschlagbund im Körper des Ventils abstützt und der Entlastungskolben eine Differentialform hat.

Nachteile dieser bekannten technischen Lösungen sind deren komplizierte Konstruktion, eine ungenügende Betriebssicherheit und ein dadurch bedingter beschränkter Anwendungsbereich.

Wesentliche Nachteile dieser und von anderen bekannten entlastbaren Scheibenventilen sind außerdem die Übertretung der optimalen Verhältnisse zwischen der Druckkraft und Entlastungskraft des Schiebers gegen den Ventilsitz beim Öffnen und bei Größenveränderung der Durchströmfenster, was zum Abheben des Schiebers von dem Sitz führt bzw. zur Vergrößerung des ungeregelten Durchsatzes des Arbeitsmediums, zur Vibration und zum vorzeitigen Ausfall mit unplanmäßigen Reparaturen als Folge.

Die Aufgabe der Erfindung liegt daher in der Erhöhung der Betriebssicherheit des Scheiben-Regelventils mit einer Entlastungseinrichtung, der Beseitigung der Beschränkungen der Durchsatzleistung bei großen Druckdifferenzen im Ventil durch Entwicklung einer derartigen Entlastungseinrichtung, die ein optimales Verhältnis der Entlastungskraft und der Druckkraft des Schiebers gegen den Ventilsatz bei jeder Größe der Druchströmfenster im Bereich 0 < F_{DF} ≤ Fₘₐₓ, wobei
- F_{DF} -: die Größe der Durchströmfenster und
- Fₘₐₓ -: die maximale Größe der Durchströmfenster für diesen Ventiltyp ist,
bzw. bei jeder Druckveränderung im Druck- und Ablaßraum des Ventils gewährleistet.

Die Erfindung wird in dem einsigen Anspruch definiert.

Das erfindungsgemäße Scheiben-Regelventil mit einer Entlastungseinrichtung besteht aus einem Körper, in dem ein schnell abnehmbarer, unbeweglicher Sitz mit peripheren Durchströmfenstern und einem Zentralkanal montiert ist, einem drehbaren Scheibenschieber mit Ausschnitten und einer zentralen Längsbohrung, der einen ständigen Kontakt zum Ventilsitz hat, einer Spindel und einem Deckel mit integriertem Zylinder. Im Zylinder befindet sich ein mit dem Schieber fest verbundener Kolben, der zusammen mit dem Zylinder eine mit dem Ablaßraum des Ventils kommunizierende Entlastungskammer bildet. Auf der Dichtfläche des Schiebers ist eine Zwischenkammer in Form von Sektorenaussparungen hergestellt, die mit dem zentralen Kanal des Ventilsitzes kommunizieren.

Die Vorzüge des erfindungsgemäßen Scheiben-Regelventils bestehen unter anderem in folgendem:
- es ermöglicht die Änderung der Konstruktionsgröße der Durchströmfenster bei Bedarf unmittelbar vor Ort,
- die Spindel ist vom Einfluß des Arbeitsmediums geschützt, da sie sich in der Entlastungskammer befindet,
- es gewährleistet einer relative Unveränderlichkeit des spezifischen Kontaktdruckes auf Dichtflächen zwischen dem Sitz und dem Schieber,
- es schließt das Entstehung einer Schiebervibration im Strom des Arbeitsmediums aus,
- es verhindert eine Schieberverklemmung bei Vorhandensein von festen Partikeln im Arbeitsmedium,
- es ermöglicht die Montage eines abnehmbaren Schutz- oder Drosselmantels unter den Ventilsitz,
- es reduziert die auf den Ventilsitz gerichtete Kraft aus der Druckdifferenz proportional zum Öffnungsgrad des Ventils.

Im folgenden soll die Erfindung an Hand von Zeichnungen näher erläutert werden. Es zeigen
- Fig. 1 -: das Scheiben-Regelventil mit einer Entlastungseinrichtung im Vertikalschnitt,
- Fig. 2 -: den Schieber mit Ventilsitz in geschlossener Stellung (vergrößert),
- Fig. 3 -: den Schieber mit Ventilsitz in geöffneter Stellung (vergrößert),
- Fig. 4 -: den Schnitt A-A von Fig. 2,

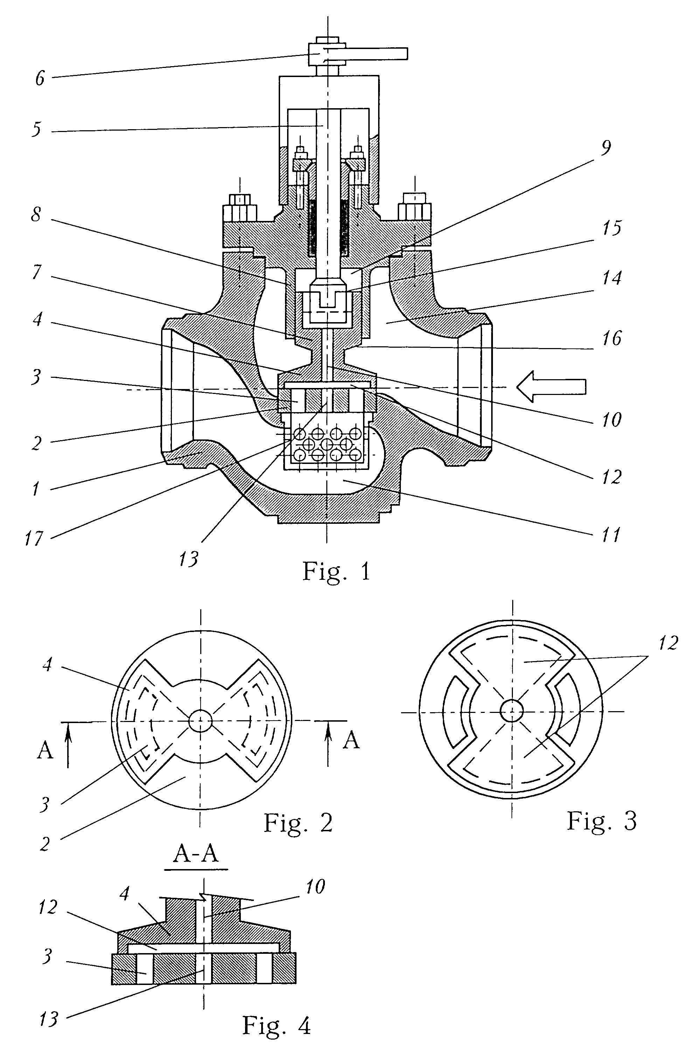

Bei einer besonders bevorzugten Ausführungsform der Erfindung ist gemäß Fig. 1 im Ventilkörper 1 ein Sitz 2 mit peripheren Profildurchströmfenstern 3 für den regelbaren Durchlaß des Mediums und ein Scheibenschieber 4 mit Ausschnitten montiert. Spindel 5 und Hebel 6 dienen zur Übertragung des Drehmomentes von einem Stellmechanismus (in der Fig. nicht dargestellt) zum Schieber. Kolben 7, der unzerlegbar mit dem Schieber verbunden ist und Zylinder 8 bilden eine Entlastungskammer 9. Die Kammer ist durch Kanal 10 über eine Zwischenkammer 12 mit dem Ablaßraum 11 verbunden.
Die Zwischenkammer 12 ist in Form von Sektorenaussparungen auf der Dichtfläche des Schiebers hergestellt und ist mit dem Zentralkanal 13 im Ventilsitz 2 verbunden. Das Arbeitsmedium tritt in den Druckraum 14 des Ventils ein. Der Kolben 7 hat Aktivoberflächen 15 und 16, deren Flächen so ausgewählt sind, daß die Entlastungskraft die Druckkraft des Schiebers 4 gegen Ventilsitz 2 nicht überschreitet. Im Ablaßraum 11 ist ein Schutzmantel 17 unter dem Ventilsitz 2 montiert.

Das Ventil funktioniert folgendermaßen:

Die Durchsatzregelung des Arbeitsmediums geschieht durch Drehen des Schiebers 4. Dabei verändert sich der Durchmesser der von ihm abgesperrten Durchströmfenster 3 im Ventilsitz 2.

Die Entlastungseinrichtung funktioniert wie folgt:

Bei der Durchsatzregelung des Arbeitsmediums wird der Schieber 4 gedreht. Dabei wird die Änderung der von ihm abgesperrten Fensterflächen 3 (Fig. 2) durch die Fläche der Zwischenkammer 12 kompensiert (Fig. 3). Der Druck in der Zwischenkammer ist immer gleich dem Druck im Ablaßraum 11 (Fig. 1).

So bleibt die Druckkraft des Schiebers 4 (Fig. 4) gegen den Ventilsitz 2, die gleich ist dem Produkt aus Zwischenkammerfläche 12 und Druckdifferenz im Druck- 14 und Ablaßraum 11, im optimalen Verhältnis mit der Entlastungskraft, die der Fläche der aktiven Oberflächen 15 und 16 des Kolbens 7 und der Druckdifferenz im Druck- 14 und Ablaßraum 11 des Ventils proportional ist.

Infolgedessen wird die optimale Druckkraft des Schiebers 4 zu dem Ventilsitz 2 sogar bei vollem Öffnen des Ventils und bei beliebiger Fläche der Durchströmfenster gewährleistet.

Das Scheiben-Regelventil mit einer Entlastungseinrichtung kann als Regelorgan zusammen mit Stelleinrichtungen der automatisierten Steuersysteme in Wärme- und Kernkraftwerken eingesetzt werden.

Das Ventil ist in der Lage, eine sichere Arbeit der Hauptausrüstung bei höheren Druck- und Temperaturparametern sowie bei kleinem und großem Durchsatz des Arbeitsmediums zu gewährleisten.

Das Ventil kann mit Wasser, Dampf und zweiphasigem Wasser-Dampf-Medium arbeiten. Als Speise-Regelventil kann es die Wasserdurchsatzregelung in einem Dampferzeuger vom Zeitpunkt des Reaktoranfahrens bei maximaler Druckdifferenz im Ventil bis zur Aufnahme der vollen Leistung durch den Reaktor sicherstellen.

### Bezugszeichenaufstellung

- 1: Ventilkörper
- 2: Sitz
- 3: Profildurchströmfenster
- 4: Scheibenschieber
- 5: Spindel
- 6: Hebel
- 7: Kolben
- 8: Zylinder
- 9: Entlastungskammer
- 10: Kanal
- 11: Ablaßraum
- 12: Zwischenkammer
- 13: Zentralkanal
- 14: Druckraum
- 15: Aktivoberfläche
- 16: Aktivoberfläche
- 17: Schutzmantel

## Patentansprüche

1. Scheiben-Regelventil mit einer Entlastungseinrichtung, in dessen Körper (1) ein unbeweglicher Sitz (2) mit peripheren Profildurchströmfenstern (3) und einem mit dem Ablaßraum verbundenen zentralen Kanal (13) angeordnet ist, der einen ständigen Kontakt zu einem mit Ausschnitten versehenen und mit einer Spindel (5) und einem Antriebshebel (6) verbundenen Schieber (4) hat, sowie ein im Druckraum (14) angeordneten mit dem Ablaßraum (11) verbundenen Zylinder (8), in dem ein Kolben (7) angeordnet ist, der mit dem Zylinder (8) eine Entlastungskammer (9) bildet, wobei der Schieber (4) unzerlegbar mit dem Kolben (7) verbunden ist, der eine durchgehende zentrale Längsbohrung (10) aufweist, die die Entlastungskammer mit dem zentralen Kanal (13) des Ventilsitzes (2) verbindet, **dadurch gekennzeichnet**, daß eine Zwischenkammer (12) in Form von Sektorenaussparungen auf der Dichtoberfläche des Schiebers (4) ausgebildet und mit dem Zentralkanal (13) des Ventilsitzes (2) verbunden ist und daß der Zylinder (8) mit einem auf dem Ventilkörper (1) unbeweglich angeordneten Deckel integriert ist.

## Claims

1. A regulation disc valve with discharging device containing installed in the body (1) fixed seat (2) with profile peripheral ports (3), and connected with discharge chamber via central channel (13) being in constant communication with the slide (4) made with notches and connected to spindle (5) and actuator lever (6) and also a cylinder (8), located in discharge cavity (14) and communicated with drainage chamber (11); a piston (7) is installed in the cylinder, which forms together with the cylinder (8) a discharge chamber (9); the slide (4) is permanently fixed to the piston (7) that has a central longitudinal through opening (10) connecting discharge chamber with central channel (13) in the seat (2) being different that intermediate chamber (12) made as sectorial notches is realized on the sealing surface of the slide (4) and communicated with central channel (13) in the seat (2), and the cylinder (8) is united with the lid unremovably fixed on the valve body (1).

## Revendications

1. La soupape de réglage à disque avec le dispositif de décharge dans le boîtier (1) duquel est monté le siège (2) immobile avec les orifices périphériques profilés (3) étant en contact permanent avec le tiroir (4) comprenant les encoches et communiquant avec la tige (5) et le levier de commande (6), ainsi que le cylindre (8) disposé dans le creux de charge (14) et communiquant avec le creux de vidange (11) dans lequel est monté le piston (7) formant avec le cylindre (8) une chambre de décharge (9), le tiroir (4) est assemblé d'une manière fixe avec le piston (7) dans lequel est aménagé le trou centrale longitudinal (10) liant la chambre de décharge avec la voie centrale (13) dans le siège (2), caractérisée par ce que la chambre intermédiaire (12) sous forme de rainures sectorielles est réalisée sur la surface d'étanchéité (4) et communique avec la voie centrale (13) du siège (2) et le cylindre (8) est lié au couvercle monté d'une manière fixe sur le boîtier de la soupape (1).
